**Europäisches Patentamt**

(19) **European Patent Office**

**Office européen des brevets**

(11) Publication number : **0 552 932 A1**

## (12) EUROPEAN PATENT APPLICATION

(21) Application number : 93300378.2

(22) Date of filing : 20.01.93

(51) Int. Cl.$^5$ : **C03B 11/08, C03C 3/068**

(30) Priority : **21.01.92 JP 8541/92**

(43) Date of publication of application :
**28.07.93 Bulletin 93/30**

(84) Designated Contracting States :
**DE FR GB**

(71) Applicant : **SUMITA OPTICAL GLASS, INC.**
**1-28, Kanda Suda-cho**
**Chiyoda-ku Tokyo (JP)**

(72) Inventor : **Otsuka, Masaaki**
**74 Honjuku 7-chome**
**Kitamoto-shi, Saitama-ken (JP)**
Inventor : **Komiya, Masayuki**
**6-24-204, Honmachi Higashi 6-chome**
**Yono-shi, Saitama-ken (JP)**
Inventor : **Nagahama, Shinobu**
**Rune Kasukabe 4-308, 136-1, Douguchihiruta**
**Kasukabe-shi, Saitama-ken (JP)**
Inventor : **Sawanobori, Naruhito**
**389-3-205, Suzuya**
**Yono-shi, Saitama-ken (JP)**

(74) Representative : **Hardisty, David Robert et al**
**BOULT, WADE & TENNANT 27 Furnival Street**
**London EC4A IPQ (GB)**

(54) **An optical glass for precision press molding.**

(57) An optical glass for precision press molding, having good chemical durability and optical constants, i.e. a sag temperature (At) of at most 550 °C, a refractive index (nd) of 1.625 to 1.690 and an Abbe number ($\nu$d) of at least 57, which can be subjected to precision press molding at a temperature of at most 600°C and thus is useful for the production of an aspherical lens is provided, which has a chemical composition (% by weight) comprising :

| | |
|---|---|
| $SiO_2$ | 2 to 13 % |
| $B_2O_3$ | 11 to 25 % |
| $SiO_2 + B_2O_3$ | 23 to 30 % |
| $LaF_3$ | 5 to 30 % |
| $Gd_2O_3$ | 4 to 13 % |
| $Y_2O_3$ | 4 to 13 % |
| $BaF_2$ | 22 to 45 % |
| $Li_2O$ | 0 to 6 % |
| LiF | 0 to 8 % |
| $Li_2O + LiF$ | 0.5 to 8 % |

EP 0 552 932 A1

This invention relates to an optical glass for a precision press, which can be subjected to a precision press molding at a low temperature and does not need grinding nor polishing after the precision press molding.

As a known optical glass having optical constants within the scope of those of the present invention and having been put to practical use independently of the precision press molding, there are optical glasses called LaK (intrinsically, Si-B-La-Ba-O system). In addition, other glasses having optical constants a part being within the scope of the present invention have been known which are disclosed in US Patent No. 2,456,033 (intrinsically consisting of B-La-R-F-O system but not using $Gd_2O_3$ nor $Y_2O_3$), Japanese Patent Publication No. 6297/1985 (intrinsically consisting of B-La-Gd-R-F-O system but using at least 25 % by weight of $B_2O_3$ and not using $Y_2O_3$), Japanese Patent Publication No. 163138/1986 (intrinsically consisting of B-La-Yb-Al-O system, but using only at most 5 % by weight of F as an optional component) and Japanese Patent Publication No 43693/1990 (intrinsically consisting of Si-B-La-Ca-O system, but using at least 48 % by weight of $B_2O_3$ and not using F). Moreover, a glass having optical constants a part of which being within the scope of those of the present invention has been known, as an optical glass for precision press molding, which is disclosed in Japanese Patent Publication No. 5341/1991 (intrinsically consisting of Si-La-Ba-Li-O system, but not using $Gd_2O_3$, $Y_2O_3$ and F) and glasses having optical constants not within the scope of the present invention, but similar to those of the present invention have been known, as an optical glass for precision press molding, which are disclosed in Japanese Patent Publication No 123040/1987 (intrinsically consisting of Si-B-Li-Ba-La-O system, but using at least 20 % by weight of $SiO_2$ and not using F), Japanese Patent Publication No. 41859/1988 (intrinsically consisting of B-La-Ba-Li-F-O system, but using 2.5 to 6.5 % by weight of F, at most 5 % by weight of $Y_2O_3$, as an optional component, and not using $Gd_2O_3$, Japanese Patent Publication No 286934/1989 (intrinsically consisting of Si-B-La[Gd]-Li-Ca[Ba]-O system, but not using $Y_2O_3$ and F), Japanese Patent Publication No. 16932/1991 (intrinsically consisting of B-Gd-Li-La-F-O system, but using $SiO_2$, as an optional component, and not using $BaF_2$) and Japanese Patent Publication No 37130/1991 (intrinsically consisting of Si-B-Li-La-Al-Zr-O system, but not using $Y_2O_3$ and F).

However, there is only the known optical glass of LaK type, having optical constants within the scope of those of the present invention, which has a very high sag temperature (At), i.e. at least 660°C, as shown in Table 2. Since the precision press molding is ordinarily carried out at a temperature of 30-50 °C higher than the sag temperature, the optical glass of LaK type cannot be subjected to precision press molding unless the molding temperature is adjusted to at least 690°C . The limit of the temperature for precision press molding in mass production is at most 600 °C, preferably at most 580°C, since if higher than the upper limit, there arises a problem that a material of a mold tends to be oxidized and maintenance of the surface precision is too difficult to effect mass production thereof. Thus, the known optical glass of LaK type is not suitable for precision press moding. Furthermore, the known optical glass of LaK type is more inferior in chemical durability as shown in Table 2 and even if a lens is prepared therefrom by precision press molding, it has a number of problems on practical use.

Optical glasses as disclosed in Japanese Patent Publication Nos. 163138/1986 and 43693/1990 each have a higher precision press molding temperature than the known optical glass of LaK type and those disclosed in US Patent No. 2,456,033 and 6297/1985 each have also a high precision press molding temperature, i.e. at least 600°C. All of these glasses do not have both the optical constants and precision press moldability at which the present invention aims. Japanese Patent Publication No. 5341/1991 discloses an optical glass for precision press molding, having a higher sag temperature (At), i.e. 570-595 °C and a precision press molding temperature of substantially at least 600 °C, while the optical glass of the present invention has a sag temperature of 550 °C. Optical glasses disclosed in Japanese Patent Publication Nos. 123040/ 1987, 41859/1988, 286934/1989, 16932/1991 and 37130/1991 each have a low precision press molding temperature, but do not have the optical constants of the present invention, as is evident from Examples.

It is an object of the present invention to provide an optical glass having optical constants, i.e. refractive index (nd) of 1.625 to 1.690 and Abbe number ($v$ d) of at least 57, which can be subjected to precision press molding at a low temperature (at most 600 °C ).

It is another object of the present invention to provide an optical glass having good chemical durability.

These objects can be attained by an optical glass for precision press molding, having a low softening point, good chemical durability and optical constants, i.e. a sag temperature (At) of at most 550 °C, a refractive index (nd) of 1.625 to 1.690 and an Abbe number ($v$ d) of at least 57, which has a chemical composition (% by weight) comprising 2 to 13 % of $SiO_2$, 11 to 25 % of $B_2O_3$, 23 to 30 % of ($SiO_2$ + $B_2O_3$), 5 to 30 % of $LaF_3$, 4 to 13 % of $Gd_2O_3$ 4 to 13 % of $Y_2O_3$. 22 to 45 % of $BaF_2$, 0 to 6 % of $Li_2O_3$, 0 to 8 % of LiF and 0.5 to 8 % of ($Li_2O$ + LiF).

The inventors have made various studies to develop such an optical glass considering the disadvantages of the prior art optical glasses, as described above, and consequently, have found that a fluorophosphate optical glass (Si-B-La-Gd-Y-Ba-Li-F-O system) is capable of satisfying the aimed object. The features of the present invention are as follows:

The first feature of the present invention consists in positively using Si, as an essential component, so as to render the chemical durability of the optical glass very excellent and to increase the viscosity of the optical glass and prevent it from crystallization. The second feature consists in using B in an amount as small as possible, since B tends to degrade the chemical durability of the optical glass The third feature consists in positively using a large amount of rare earth elements La, Gd and Y as essential component, so as to not only improve the chemical durability but also stabilize the optical glass by multi-component effect. The fourth feature consists in positively using Li so as to lower the precision press molding temperature; Japanese Patent Publication No. 43693/1990 discloses using no alkali elements and US Patent No. 2,456,033, Japanese Patent Publication No. 6297/1985 and Japanese Patent Publication No. 163138/1986 discloses using alkali elements as an optional element. The fifth feature consists in using a large amount of F with Li to lower the precision press molding temperature; Japanese Patent Publication No. 123040/1987, Japanese Patent Publication No. 286934/1989, Japanese Patent Publication No. 5341/1991 and Japanese Patent Publication No. 37130/1991 discloses using Li to lower the precision press molding temperature. Japanese Patent Publication No. 41859/1985 discloses using Li and a small amount of F, thus giving a higher dispersion (larger Abbe number) than the present invention, and moreover Japanese Patent Publication No. 16932/1991 discloses using Li and a large amount of F, thus giving a higher refractive index and higher dispersion than the present invention.

Accordingly, the present invention provides an optical glass for precision press molding, having a low softening point, good chemical durability and optical constants, i.e. a sag temperature (At) of at most 550 °C, a refractive index (nd) of 1.625 to 1.690 and an Abbe number ($\nu$ d) of at least 57, which has a chemical composition (% by weight) comprising:

| | |
|---|---|
| $SiO_2$ | 2 to 13 % (preferably 3.0 to 12.5) |
| $B_2O_3$ | 11 to 25 % (preferably 12.0 to 24.0) |
| $SiO_2 + B_2O_3$ | 23 to 30 % (preferably 24.0 to 29.0) |
| $LaF_3$ | 5 to 30 % (preferably 8.0 to 30.0) |
| $Gd_2O_3$ | 4 to 13 % (preferably 5.0 to 12.0) |
| $Y_2O_3$ | 4 to 13 % (preferably 5.0 to 12.0) |
| $BaF_2$ | 22 to 45 % (preferably 23.0 to 44.0) |
| $Li_2O$ | 0 to 6 % (preferably 0 to 5.0) |
| LiF | 0 to 8 % (preferably 0 to 7.0) |
| $Li_2O$ + LiF | 0.5 to 8 % (preferably 1.0 to 7.0) |

The grounds for limiting the component range of the optical glass of the present invention to as described above are as follows:

$SiO_2$ is an essential component for not only providing a network of the optical glass, increasing the viscosity and preventing crystallization, but also largely improving the chemical durability and should be present in a proportion of 2 to 13 % by weight, since if less than 2 % by weight, these effects cannot sufficiently be obtained, while if more than 13 % by weight, non-soluble matters occur in an optical glass solution, so that the optical glass becomes . unstable.

$B_2O_3$ is an essential component for providing a network of the optical glass and should be present in a proportion of 11 to 25 % by weight, since if less than 11 % by weight, the optical glass becomes unstable, while if more than 25 % by weight, not only the sag temperature becomes higher, but also the chemical durability is deteriorated.

In addition, ($SiO_2 + B_2O_3$) should be present in a proportion of 23 to 30 % by weight, since if less than 23 % by weight, the optical glass becomes unstable, while if more than 30 % by weight, the sag temperature (At) becomes higher.

$LaF_3$ is an essential component for obtaining optical constants according to the object of the present invention, improving the chemical durability and lowering the precision press molding temperature and should be present in a proportion of 5 to 30 % by weight, since if less than 5 % by weight, these effects cannot sufficiently be obtained, while if more than 30 % by weight the optical glass becomes unstable.

$Gd_2O_3$ is an essential component for increasing the refractive index (nd), improving the chemical durability and stabilizing the optical glass and should be present in a proportion of 4 to 13 % by weight, since if less than 4 % by weight, these effects cannot sufficiently be obtained, while if more than 13 % by weight, the optical glass becomes unstable.

$Y_2O_3$ is an essential component for increasing the refractive index (nd), improving the chemical durability and stabilizing the optical glass and should be present in a proportion of 4 to 13 % by weight, since if less than 4 % by weight, these effects cannot sufficiently be obtained, while if more than 13 % by weight, the optical glass becomes unstable.

$BaF_2$ is an essential component for obtaining optical constants, as the aimed object of the present invention, and lowering the precision press molding temperature and should be present in a proportion of 22 to 45 % by weight, since if less than 22 % by weight, these effects cannot sufficiently be obtained, while if more than 45 % by weight, not only the optical glass becomes unstable, but also the chemical durability is deteriorated.

$Li_2O$ is an optional component, but plays an important role for lowering the precision press molding temperature, being present in a proportion of 0 to 6 % by weight, since if more than 6 % by weight, the optical glass becomes unstable.

LiF is an optional component, but plays an important role for lowering the precision press molding temperature, being present in a proportion of 0 to 8 % by weight, since if more than 8 % by weight, the optical glass becomes unstable.

In addition, ($Li_2O$ + LiF ) should be present in a proportion of 0.5 to 8 % by weight, since if less than 0.5 % by weight, the effect of lowering the precision press molding temperature cannot sufficiently be obtained, while if more than 8 % by weight, the optical glass becomes unstable.

As far as the optical glass of the present invention has the aimed optical constants and sag temperature (At), a part of $SiO_2$ and $B_2O_3$ can be replaced by oxides and fluorides of Ge and Al, a part of $LaF_3$, $Gd_2O_3$ and $Y_2O_3$ can be replaced by $La_2O_3$, $Yb_2O_3$, $YbF_3$, $GdF_3$ and $YF_3$, a part of $BaF_2$ can be replaced by oxides of Ba, Sr, Ca, Mg and Zn or fluorides of Sr, Ca, Mg and Zn and a part of the fluoride or oxide of Li can be replaced by oxides and fluorides of Cs, K and Na.

Production of the optical glass of the present invention can generally be carried out by using raw materials, i.e. corresponding oxides, fluorides, carbonates and nitrates, weighed to give predetermined proportions, adequately mixing these materials, pouring the mixture in a platinum crucible, melting in an electric furnace at 1100 to 1300 °C, stirring to homogeneity, refining, then casting in a metallic mold preheated at a suitable temperature and then cooling gradually.

According to the present invention, there can be provided an optical glass for precision press molding, having good chemical durability and optical constants, i.e. a sag temperature (At) of at most 550°C, a refractive index (nd) of 1.625 to 1.690 and an Abbe number ($\nu$ d) of at least 57, which can be subjected to precision press molding at a temperature of at most 600 °C and thus is useful for the production of an aspherical lens.

The present invention will be illustrated in detail by the following examples without limiting the same.

Examples

In Table 1 are shown the compositions of optical glasses of Examples 1 to 9 and the refractive index (nd), Abbe number ( $\nu$ d), sag temperature (At) and chemical durability (water resisting property) as characteristic values thereof The characteristic values of the known optical glass of LaK type (fundamentally consisting of Si-B-La-Ba-O system) having been put to practical use are also shown in Table 2. The chemical durability (water resisting property) is determined by the powder method of Japanese Optical Glass Industrial Standard (JOGIS 06-1975), which implies that the smaller is the numeral value (reduction ratio-unit wt %), the better is the chemical durability.

Each of optical glasses was produced by using raw materials, i.e. corresponding oxides, fluorides, carbonates and nitrates, weighing to give predetermined proportions as shown in Table 1, adequately mixing these materials, putting the mixture into a platinum crucible, melting in an electric furnace at 1100 to 1300°C , stirring to homogeneity, refining, then casting in a metallic mold preheated at a suitable temperature and then cooling gradually.

Table 1

|  | 1 | 2 | 3 |
|---|---|---|---|
| $SiO_2$ | 3.0 | 6.0 | 9.0 |
| $B_2O_3$ | 24.0 | 23.0 | 18.0 |
| $LaF_3$ | 30.0 | 25.0 | 16.0 |
| $Gd_2O_3$ | 5.0 | 10.0 | 9.0 |
| $Y_2O_3$ | 5.0 | 10.0 | 9.0 |
| $BaF_2$ | 30.0 | 23.0 | 35.0 |
| $Li_2O$ | - | - | 2.0 |
| $LiF$ | 3.0 | 3.0 | 2.0 |
| nd | 1.66594 | 1.68569 | 1.64037 |
| $\nu$ d | 59.2 | 57.3 | 60.5 |
| At (℃) | 503 | 548 | 487 |
| Chemical Durability (water resistance-wt %) | 0.03 | 0.00 | 0.06 |

Table 1 (continued)

|  | 4 | 5 | 6 |
|---|---|---|---|
| $SiO_2$ | 3.0 | 7.0 | 12.0 |
| $B_2O_3$ | 24.0 | 20.0 | 12.0 |
| $LaF_3$ | 20.0 | 19.0 | 8.0 |
| $Gd_2O_3$ | 8.0 | 12.0 | 11.0 |
| $Y_2O_3$ | 8.0 | 12.0 | 11.0 |
| $BaF_2$ | 36.0 | 24.0 | 44.0 |
| $Li_2O$ | 0.5 | 3.0 | 2.0 |
| $LiF$ | 0.5 | 3.0 | - |
| nd | 1.66988 | 1.64820 | 1.63552 |
| $\nu$ d | 58.3 | 59.6 | 60.4 |
| At (℃) | 542 | 474 | 504 |
| Chemical Durability (water resistance-wt %) | 0.04 | 0.01 | 0.04 |

Table 1 (continued)

|  | 7 | 8 | 9 |
|---|---|---|---|
| $SiO_2$ | 12.5 | 6.0 | 8.0 |
| $B_2O_3$ | 13.5 | 21.0 | 19.0 |
| $LaF_3$ | 6.0 | 23.0 | 21.0 |
| $Gd_2O_3$ | 11.0 | 10.0 | 10.0 |
| $Y_2O_3$ | 11.0 | 10.0 | 10.0 |
| $BaF_2$ | 43.0 | 25.0 | 25.0 |
| $Li_2O$ | · 3.0 | 5.0 | - |
| $LiF$ | - | - | 7.0 |
| nd | 1.63001 | 1.64641 | 1.64655 |
| $\nu$ d | 60.8 | 59.5 | 59.4 |
| At (℃) | 485 | 465 | 466 |

Chemical Durability

(water resistance-wt %)        0.08        0.06        0.02

Table 2

| Glass Type | LaKn2 | LaK6 | LaK7 | LaKn4 |
|---|---|---|---|---|
| nd | 1.64050 | 1.64250 | 1.65160 | 1.67100 |
| $\nu$ d | 60.1 | 58.1 | 58.3 | 57.2 |
| At (°C) | 663 | 688 | 674 | 661 |
| Chemical Durability (water resistance-wt %) | 0.51 | 0.23 | 0.19 | 0.33 |

It is preferred, as stated above, that $B_2O_3$ is present in the glass according to this invention in an amount of 12.0 to 24% (by weight); it is more preferred in order to provide a glass with better chemical durability that $B_2O_3$ is present in an amount of 11 to 17%.

## Claims

1. An optical glass for precision press molding having a low softening point, good chemical durability and optical constants, i.e. a sag temperature (At) of at most 550°C, a refractive index (nd) of 1.625 to 1.690 and a Abbe number ($\nu$ d) of at least 57, which has a chemical composition (% by weight) comprising 2 to 13% of $SiO_2$, 11 to 25% of $B_2O_3$, 23 to 30% of ($SiO_2 + B_2O_3$), 5 to 30% of $LaF_3$, 4 to 13% of $Gd_2O_3$. 4 to 13% of $Y_2O_3$. 22 to 45% of $BaF_2$, 0 to 6% of $Li_2O$, 0 to 8% of LiF and 0.5 to 8% of ($Li_2O$ + LiF).

2. An optical glass as claimed in claim 1 wherein the chemical composition (% by weight) comprises 3.0 to 12.5% $SiO_2$, 12.0 to 24.0% $B_2O_3$, 24 to 29.0% ($SiO_2 + B_2O_3$), 8.0 to 30.0% $LaF_3$, 5.0 to 12.0% $Gd_2O_3$, 5.0 to 12.0% $Y_2O_3$, 23.0 to 44.0% $BaF_2$, 0 to 5.0% $Li_2O$, 0 to 7.0% LiF and 1.0 to 7.0% ($Li_2O$ + LiF).

3. An optical glass as claimed in claim 1 wherein the amount $B_2O_3$ is 11 to 17%.

4. A process for producing a molded glass article wherein the raw materials to produce a glass as claimed in any one of claims 1 to 3 are melted in an electric furnace at a temperature of 1100 to 1300°C, stirring the molten composition to homogeneity, refining said composition, casting the composition in a pre-heated metallic mold and thereafter subjecting the glass to gradual cooling.

5. A process as claimed in claim 4 wherein the metallic mold is a precision press mold and the resulting glass article is an aspherical lens.

6. An optical glass lens wherein the composition of the glass is as defined in any one of claims 1 to 3.

7. A lens as claimed in claim 6 which is an aspherical lens.

| | European Patent Office | EUROPEAN SEARCH REPORT | Application Number |
|---|---|---|---|

EP    93 30 0378
PAGE1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | CHEMICAL ABSTRACTS, vol. 104, no. 16, 21 April 1986, Columbus, Ohio, US; abstract no. 134742t, page 299 ;column R ; * abstract * | 1-3 | C03B11/08 C03C3/068 |
| Y | & JP-A-60 221 338 (OHARA OPTICAL GLASS) 6 November 1985 --- | 4-7 | |
| Y | US-A-4 336 303 (H.L. RITTLER) * column 8, line 15 - column 9, line 14; figures 1-3 * --- | 4-7 | |
| D,A | DATABASE WPIL Week 8511, Derwent Publications Ltd., London, GB; AN 82-10882E & JP-B-60 006 297 (OHARA KOGAKU KK) 16 February 1985 * abstract * --- | 1-7 | |
| A | US-A-4 469 800 (J.E. BOUDOT ET AL) * abstract; claims * --- | 1-7 | TECHNICAL FIELDS SEARCHED (Int. Cl.5 ) |
| A | DE-A-3 130 715 (NIPPON KOGAKU KK) * the whole document * --- | 1-7 | C03C C03B |
| A | EP-A-0 116 433 (CORNING GLASS WORKS) * claims * | 1-7 | |
| D | & JP-A-63 041 859 (...) --- | | |
| A | FR-A-956 629 (KODAK-PATHE) * claims * | 1-3 | |
| D | & US-A-2 456 033 --- | | |
| A | GB-A-2 113 670 (CARL ZEISS-STIFTUNG) * claims * | 1-3 | |
| D | & JP-A-2 043 693 (...) --- | | |
| | -/-- | | |

The present search report has been drawn up for all claims

| Place of search | Date of completion of the search | Examiner |
|---|---|---|
| BERLIN | 16 APRIL 1993 | KUEHNE H.C. |

European Patent
Office

## EUROPEAN SEARCH REPORT

Application Number

EP    93 30 0378
PAGE2

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| D,A | DATABASE WPIL Week 8636, Derwent Publications Ltd., London, GB; AN 86-234732 & JP-A-61 163 138 (NIPPON KOGAKU KK) 23 July 1986 * abstract * | 1-3 | |
| D,A | PATENT ABSTRACTS OF JAPAN vol. 14, no. 63 (C-685)6 February 1990 & JP-A-12 86 934 ( SUMITA KOGAKU GLASS ) 17 November 1989 * abstract * | 1-7 | |
| | | | TECHNICAL FIELDS SEARCHED (Int. Cl.5 ) |

The present search report has been drawn up for all claims

| Place of search | Date of completion of the search | Examiner |
|---|---|---|
| BERLIN | 16 APRIL 1993 | KUEHNE H.C. |

EPO FORM 1503 03.82 (P0401)